# EUROPEAN PATENT APPLICATION

(11) **EP 4 653 669 A1**
(43) Date of publication of application: **26.11.2025**
(21) Application number: 25176319.9
(22) Date of filing: 14.05.2025
(51) Int. Cl.: F01D 11/12, F01D 25/00

(54) **ABRADABLE COATING**

(30) Priority: 22.05.2024 US 202418671877
(71) Applicant: RTX Corporation, Farmington, CT 06032 (US)
(72) Inventor: GOMEZ, Juan, El Paso, 79902 (US)
(74) Representative: Dehns

(57) **Abstract**

An abradable coating (140) is described which comprises a matrix material selected from hafnon, mixtures of hafnon and zircon, and rare earth disilicates (RE₂Si₂O₇), wherein RE is Sc, Y, La, Ce, Pr, Nd, Pm, Sm, Eu, Gd, Tb, Dy, Ho, Er, Tm, Yb, or Lu; and one or more dislocator materials selected from ceramic materials having a Mohs hardness of less than or equal to 6. The amount of matrix material is 30-60 vol.% based on the total volume of the coating excluding porosity, and the amount of dislocator materials is 40-70 vol.% based on the total volume of the coating excluding porosity. The abradable coating (140) has a porosity of less than or equal to 10 vol.% based on the total volume of the abradable coating (140).

## Description

### FIELD OF THE INVENTION

The present disclosure relates generally to abradable coatings and methods of preparation of abradable coatings. In particular, the present disclosure concerns abradable coatings for use with ceramic matrix materials (CMCs).

### BACKGROUND OF THE INVENTION

Gas turbine engines, in general, include a fan section, a compressor section, a combustion chamber, and a turbine section. Air enters through the fan section and is compressed in the compressor section before being introduced into the combustion section. In the combustion section, the air is mixed with fuel and ignited to generate a high-energy, high temperature gas flow. The high-energy, high temperature gas flow is expanded in the turbine section which is used to create thrust and to drive the compressor and fan sections.

The turbine section includes low and high pressure turbines having a plurality of turbine blades. The turbine section further includes a blade outer air seal (BOAS), which may be a full continuous annulus or may be segmented, to prevent/minimize leakage of the high-energy, high temperature gas flow, i.e., the working fluid, around the blade tips as it flows through the turbine section. Avoiding/minimizing such leakage increases the overall operating efficiency of the gas turbine engine.

Some components used in gas turbine engines, such as turbine blades, are positioned within close proximity to a stationary surface which is, or acts as, a seal to avoid leakage, such as the BOAS as described above. During operation, as a result of this close proximity, blade tips and seals may come into contact. To avoid blade damage, which can lead to serious damage to the engine, steps are taken so that when rub interaction occurs between the blade and the seal, the damage is absorbed by the coating, and not the blade. As a result, to avoid damage to the blades, surfaces that are in close proximity to rotating blades, such as seals, are often provided with abradable coatings. These abradable coatings are designed so that the blade tips act as an abrading component with respect to the abradable coating.

However, if the abradable coating is too hard, damage to the blade tips can result during engine operation. Such damage can be extremely detrimental to the operational lifespan of the engine and the safety of operation. Therefore, generally, the blade tip materials are harder than those used for the abradable coating. With the blade tip materials being harder, the blade tips will abrade or cut into the abradable coating during those portions of the engine operating cycle when the blade tip contacts the abradable seal.

A common approach to providing abradable coatings is to provide a coating with high porosity, for example, > 20% porosity, to facilitate the rub interaction with the blade tip. However, the resultant abradable coating is a significantly permeable coating which is susceptible to CMAS (Calcium-Magnesium-Aluminum-Silicate) infiltration, e.g., silicon-containing sand dust and volcano ash materials, at high temperatures and potentially corrosive hot gas permeability (e.g. water vapor). Additionally, increased porosity reduces erosion resistance and resistance to thermal spallation.

In addition to abradable coatings, turbomachinery components such as gas turbine engine components, may also be provided with environmental barrier coatings (EBCs) to provide protection against the corrosive forces (such as CMAS and high temperature water vapor). For example, EBC coatings can be applied to components, such as seals, that are used in high temperature locations, such as the high-pressure turbine stages aft of the combustor. For this reason, both coatings that exhibit suitable abradability and coatings that exhibit high temperature durability are desirable in the design of jet engines.

Both EBCs and abradable coatings can be multilayered. For example, an EBC can comprise a bond coat layer, which may be single layered or multilayered, to, among other things, promote adhesion between the substrate and a top coat layer which provides protection for the substrate. In addition, the top coat also may be single layered or multilayered. Similarly, the abradable coating may comprise a bond coat layer to promote adhesion to the substrate, in addition to the porous, abradable coating layer.

There exists a continuing to need for methods and materials for producing abradable coatings that enhance the properties of the resultant coatings and/or facilitate the manufacture thereof.

### SUMMARY OF THE INVENTION

In general, the present disclosure relates to an abradable coating having low porosity wherein the coating contains a matrix material and one or more dislocator materials having a lower hardness than the matrix material.

According to an aspect of the present disclosure, there is provided an abradable coating comprising: a matrix material selected from hafnon, mixtures of hafnon and zircon, and rare earth disilicates (RE₂Si₂O₇), wherein RE is Sc, Y, La, Ce, Pr, Nd, Pm, Sm, Eu, Gd, Tb, Dy, Ho, Er, Tm, Yb, or Lu; and one or more dislocator materials selected from ceramic materials having a Mohs hardness of less than or equal to 6. The amount of matrix material in the abradable coating is 30-60 vol.% based on the total volume of the abradable coating excluding porosity, and the amount of dislocator materials is 40-70 vol.% based on the total volume of the abradable coating excluding porosity. Additionally, the coating has a porosity of less than or equal to 10 vol.%, e.g., 0 vol. % to 10 vol. % or 1 vol. % to 5 vol. %, based on the total volume of the abradable coating.

According to another aspect of the present disclosure, there is provided a coated article comprising: a ceramic matrix composite substrate and a coating system; wherein the coating system comprises a first abradable coating layer comprising a matrix material selected from hafnon, mixtures of hafnon and zircon, and rare earth disilicates (RE₂Si₂O₇), wherein RE is Sc, Y, La, Ce, Pr, Nd, Pm, Sm, Eu, Gd, Tb, Dy, Ho, Er, Tm, Yb, or Lu, and one or more dislocator materials selected from ceramic materials having a Mohs hardness of less than or equal to 6; and wherein the amount of matrix material in said first abradable coating layer is 30-60 vol.% based on the total volume of the first abradable coating layer excluding porosity, and the amount of dislocator materials in said first abradable coating layer is 40-70 vol.% based on the total volume of the first abradable coating layer excluding porosity, and the first abradable coating layer has a porosity of less than or equal to 10 vol.% based on the total volume of the first abradable coating layer.

According to another aspect of the present disclosure, there is provided a method for preparing a coated article comprising: applying a coating system to a ceramic matrix composite substrate; wherein the coating system comprises a first abradable coating layer comprising a matrix material selected from hafnon, mixtures of hafnon and zircon, and rare earth disilicates (RE₂Si₂O₇), wherein RE is Sc, Y, La, Ce, Pr, Nd, Pm, Sm, Eu, Gd, Tb, Dy, Ho, Er, Tm, Yb, or Lu, and one or more dislocator materials selected from ceramic materials having a Mohs hardness of less than or equal to 6; and wherein the amount of matrix material in said first abradable coating layer is 30-60 vol.% based on the total volume of the first abradable coating layer excluding porosity, and the amount of dislocator materials in said first abradable coating layer is 40-70 vol.% based on the total volume of the first abradable coating layer excluding porosity, and the first abradable coating layer has a porosity of less than or equal to 10 vol.% based on the total volume of the first abradable coating layer.

In further examples of the present disclosure, including further examples of each of the above, the matrix material is hafnon or a mixture of hafnon and zircon.

In further examples of the present disclosure, including further examples of each of the above, the matrix material is mixture of hafnon and zircon wherein the molar ratio of hafnon to zircon is 2:1 to 4:1, for example, a molar ratio of hafnon to zircon is 7:3 to 3:1.

In further examples of the present disclosure, including further examples of each of the above, the matrix material is selected from rare earth disilicates (RE₂Si₂O₇), wherein RE is Sc, Y, La, Ce, Pr, Nd, Pm, Sm, Eu, Gd, Tb, Dy, Ho, Er, Tm, Yb, or Lu.

In further examples of the present disclosure, including further examples of each of the above, the dislocator materials are selected from ceramic materials having a Mohs hardness of 3.5 to 6.0, for example 3.5 to 4.5, or 4.0 to 6.0, or 4.5 to 5.5.

In further examples of the present disclosure, including further examples of each of the above, the matrix material is selected from rare earth disilicates (RE₂Si₂O₇), wherein RE is Sc, Y, La, Ce, Pr, Nd, Pm, Sm, Eu, Gd, Tb, Dy, Ho, Er, Tm, Yb, or Lu, and the dislocator materials are selected from ceramic materials having a Mohs hardness of less than or equal to 5.0, for example, 3.5 to 5.0, 3.5 to 4.5, or 4.0 to 6.0, or 4.5 to 5.5.

In further examples of the present disclosure, including further examples of each of the above, the dislocator materials are selected from ceramic materials having a coefficient of thermal expansion of less than 6 × 10⁻⁶/°C, for example, 4.0 × 10⁻⁶/°C to 6.0 × 10⁻⁶/°C or 4.5 × 10⁻⁶/°C to 5.5 × 10⁻⁶/°C.

In further examples of the present disclosure, including further examples of each of the above, the dislocator materials are selected from anorthite, mullite, and RE'PO₄, wherein RE' is Y, Sc, Tb, Dy, Ho, Er, Tm, Yb, and Lu.

In further examples of the present disclosure, including further examples of each of the above, the amount of matrix material in the abradable coating is 50-60 vol.% based on the total volume of the abradable coating excluding porosity, and the amount of dislocator materials in the abradable coating is 40-50 vol.% based on the total volume of the abradable coating excluding porosity.

In further examples of the present disclosure, including further examples of each of the above, the one or more dislocator materials have a melting point greater than or equal to 1500°C, for example, greater than or equal to 1650°C, greater than or equal to 1800°C, or greater than or equal to 1850°C.

In further examples of the present disclosure, including further examples of each of the above, the abradable coating has a porosity of 1 to 10 vol.% based on the total volume of the abradable coating, for example, 2 to 8 vol.% based on the total volume of the abradable coating.

In further examples of the present disclosure, including further examples of the above exemplary coated article, the coated article is a blade outer air seal.

In further examples of the present disclosure, including further examples of the above exemplary coated article, the coated article is a blade outer air seal and the abradable coating is applied to an area of the blade outer air seal in the region of rub interaction between a blade and the blade outer air seal.

In further examples of the present disclosure, including further examples of the above exemplary coated article, the coating system includes an environmental barrier coating positioned between the ceramic matrix composite substrate and the first abradable coating, for example, a multilayered environmental barrier coating such as an environmental barrier coating comprising a bond layer and a top coat layer.

In further examples of the present disclosure, including further examples of the above exemplary method, the matrix material and dislocator materials are applied simultaneously.

In further examples of the present disclosure, including further examples of the above exemplary method, the coating system further comprises an environmental barrier coating positioned between said ceramic matrix composite substrate and said first abradable coating.

### BRIEF DESCRIPTION OF FIGURES

The features of the disclosure believed to be novel and the elements characteristic of the invention are set forth with particularity in the appended claims. Implementations of the inventive concepts disclosed herein may be better understood when consideration is given to the following description of the figures. The figures are for illustration purposes only and are not drawn to scale. These drawings are not necessarily to scale, and which some features may be exaggerated and some features may be omitted or may be represented schematically in the interest of clarity. Like reference numerals in the drawings may represent and refer to the same or similar element, feature, or function. The disclosure itself, however, both as to organization and method of operation, can best be understood by reference to the description of the preferred embodiment(s) which follows, taken in conjunction with the accompanying drawings in which:
Fig. 1 schematically illustrates an example gas turbine jet engine.
Fig. 2 is a partial longitudinal cutaway view of a section of gas turbine engine showing a portion of a blade outer air seal (BOAS).
Fig. 3 illustrates a seal for a gas turbine engine.
Fig. 4 illustrates a cross section of an embodiment of a portion of the seal of Fig. 2 along line B - B showing an abradable coating according to the present disclosure.
Fig. 5 illustrates a cross section of a coated article according to the present disclosure.

### DETAILED DESCRIPTION OF THE INVENTION

The embodiments of the present disclosure can comprise, consist of, and consist essentially of the features and/or steps described herein, as well as any of the additional or optional ingredients, components, steps, or limitations described herein or would otherwise be appreciated by one of skill in the art. It is to be understood that all concentrations disclosed herein are by weight percent (wt. %.) based on a total weight of the composition unless otherwise indicated.

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of the embodiments of the inventive concepts, numerous specific details are set forth in order to provide a more thorough understanding of the inventive concepts. It will be apparent to one skilled in the art, however, having the benefit of the instant disclosure that the inventive concepts disclosed herein may be practiced without these specific details.

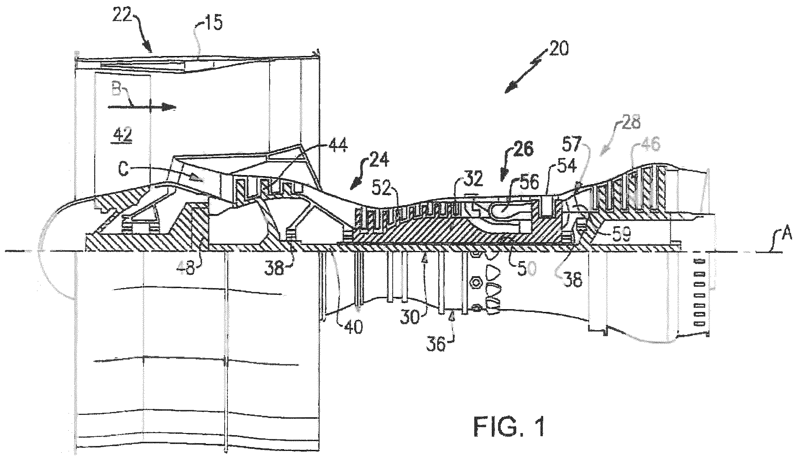

Fig. 1 schematically illustrates an example of a gas turbine jet engine 20 (i.e., a two-spool turbofan) which includes a fan section 22, a compressor section 24, a combustor section 26, and a turbine section 28. Fan section 22 drives air along a bypass flow path B in a bypass duct defined within a housing 15, and also along a core flow path C for compression in compressor section 24, with subsequent introduction into combustor section 26, followed by expansion through turbine section 28. Although Fig. 1 depicts a two-spool turbofan gas turbine jet engine, it should be understood that the concepts described herein are not limited to use with two-spool turbofans engines and may be applied to other types of turbine jet engines.

Engine 20 generally includes a low speed spool 30 and a high speed spool 32 mounted for rotation about an engine central longitudinal axis A, relative to an engine static structure 36, via several bearing systems 38. Various bearing systems 38 at various locations may alternatively or additionally be provided. The location of bearing systems 38 may be varied as appropriate to the application.

The low speed spool 30 generally includes an inner shaft 40 that interconnects, a first (or low) pressure compressor 44 and a first (or low) pressure turbine 46. Inner shaft 40 is connected to fan 42 through a speed change mechanism, which in this exemplary embodiment is illustrated as a geared structure 48 to drive fan 42 at a lower speed than the low speed spool 30. High speed spool 32 includes an outer shaft 50 that interconnects a second (or high) pressure compressor 52 and a second (or high) pressure turbine 54. Combustor 56 is positioned between high pressure compressor 52 and high-pressure turbine 54. A mid-turbine frame 57 of the engine static structure 36 may be arranged generally between the high-pressure turbine 54 and the low-pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core air flow is first compressed by low pressure compressor 44, and then by the high-pressure compressor 52. Thereafter, the core air flow is mixed and burned with fuel in combustor 56, then expanded in high pressure turbine 54 and low-pressure turbine 46. The mid-turbine frame 57 includes airfoils 59 which are in the core airflow path C. The turbines 46 and 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low-pressure compressor, or aft of the combustor section 26 or even aft of turbine section 28, and fan 42 may be positioned forward or aft of the location of gear system 48.

The turbine section 28 includes a blade outer air seal(s) (BOAS(s)). Generally, the blade outer air seal is made up of a plurality of BOAS segments that form an annular shaped shroud around the engine central longitudinal axis A.

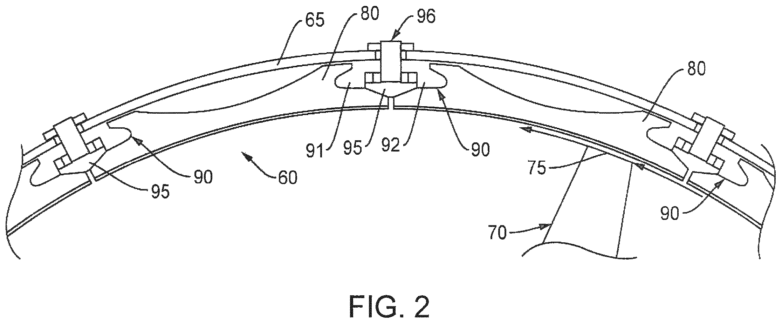

Fig. 2 illustrates a portion of a BOAS assembly 60 disposed in an annulus radially between an outer casing 65 of the engine and a blade 70 with blade tip 75. The BOAS assembly 60 includes a plurality of BOAS segments 80. In this embodiment, the BOAS segments 80 are arranged to form a segmented full ring hoop assembly that circumferentially surrounds the associated blades 70 and provides a sealing surface for the blade tips 75 to prevent leakage of airflow over to the blades 70.

In this embodiment, the BOAS segments 80 are attached to the outer casing 65 by a support structure that includes a retention block 90 which is fastened to the engine outer casing 65 by a fastener 96. The retention block 90 includes tapered arms 91, 92 on circumferentially opposed sides thereof. The support structure also includes a wedge seal 95, sealing the inter segment gap between adjacent segments 80, which is retained in a compartment of the retention block 90.

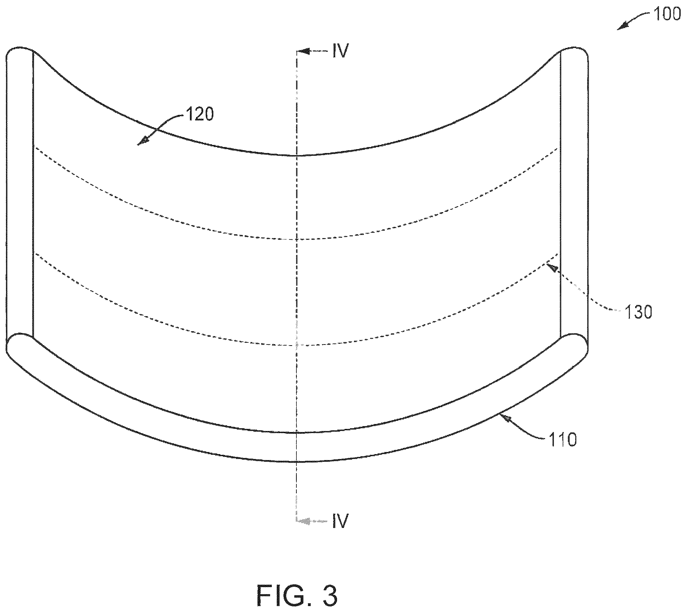

Fig. 3 illustrates an example of a portion of a seal 100 for a gas turbine engine, for example, a BOAS, which includes a base having convex radially outward surface 110 and a concave radially inward surface 120. The inward surface 120 faces the interior of the engine and is exposed to the high-energy, high temperature gas flow. On the inward surface 120, a region 130 is shown. This represents the region where rub interaction events between the blade and the seal will occur.

In accordance with the present disclosure, the inward surface 120 has a coating layer, particularly in the rub interaction region 130, that is abradable so that when contact occurs between the blade and the seal 100, the blade tip will abrade the abradable coating. In other words, the blade tip has the higher hardness and acts as an abrading component with respect to the abradable coating. In this regard, it is noted that that the blade tip may itself be provided with a coating to increase its hardness or abrasiveness (e.g., tipping abrasives). Thus, the abradability of the coating is desirably matched to the hardness/abrasiveness of the blade tip (whether coated or uncoated) to achieve the desired rub interaction between these two structural elements.

In accordance with an embodiment of the present disclosure, the abradable coating layer comprises a matrix material selected from hafnon, mixtures of hafnon and zircon, and rare earth disilicates (RE₂Si₂O₇), wherein RE is Sc, Y, La, Ce, Pr, Nd, Pm, Sm, Eu, Gd, Tb, Dy, Ho, Er, Tm, Yb, or Lu, and one or more dislocator materials selected from ceramic materials having a Mohs hardness of less than or equal to 6, wherein the amount of matrix material is 30-60 vol.%, for example, 50-60 vol.%, based on the total volume of the abradable coating layer excluding porosity, the amount of dislocator materials is 40-70 vol.%. for example, 40-50 vol.%, based on the total volume of the abradable excluding porosity, and the abradable coating layer has a porosity of less than or equal to 10 vol.% based on the total volume of the abradable coating.

Similarly, in accordance with another embodiment of the present disclosure, an article (such as a seal, for example a BOAS) is provided with an abradable coating layer comprising a matrix material selected from hafnon, mixtures of hafnon and zircon, and rare earth disilicates (RE₂Si₂O₇), wherein RE is Sc, Y, La, Ce, Pr, Nd, Pm, Sm, Eu, Gd, Tb, Dy, Ho, Er, Tm, Yb, or Lu, and one or more dislocator materials selected from ceramic materials having a Mohs hardness of less than or equal to 6, wherein the amount of matrix material is 30-60 vol.%, for example, 50-60 vol.%, based on the total volume of the abradable coating layer excluding porosity, the amount of dislocator materials is 40-70 vol.%. for example, 40-50 vol.%, based on the total volume of the abradable excluding porosity, and the abradable coating layer has a porosity of less than or equal to 10 vol.% based on the total volume of the abradable coating.

As noted above, the matrix material can be hafnon which is a hafnium nesosilicate mineral, generally depicted by the chemical formula (Hf, Zr)SiO₄, or a mixture of hafnon and zircon ((ZrSiO₄). Regarding mixtures of hafnon and zircon, these include, for example, mixtures wherein the molar ratio of hafnon to zircon is 2:1 to 4:1, such as 7:3 to 3:1.

The Mohs hardness of hafnon and mixtures of hafnon and zircon is generally 7.0 to 7.5. For this reason, it is desirable for the dislocator materials to be selected from ceramic materials having a lower Mohs hardness, such as a Mohs hardness of less than or equal to 6, for example, ceramic materials having a Mohs hardness of 3.5 to 6.0, such as 3.5 to 4.5, or 4.0 to 6.0, or 4.5 to 5.5. At higher Mohs hardness of the matrix material, it is desirable to use dislocator materials selected from ceramic materials with lower Mohs hardness. For example, hafnon has a relatively high hardness. When the abradable coating layer has a hafnon matrix that amounts to 50-60 vol.% based on the total volume of the abradable coating layer excluding porosity, it is desirable for the dislocator materials to have a lower Mohs hardness, for example, a Mohs hardness of 3.5 to 4.5.

As also noted above, the matrix material can be a rare earth disilicate (RE₂Si₂O₇), wherein RE is Sc, Y, La, Ce, Pr, Nd, Pm, Sm, Eu, Gd, Tb, Dy, Ho, Er, Tm, Yb, or Lu. The Mohs hardness of rare earth disilicate is generally 6.0 to 6.5. For this reason, it is desirable for the dislocator materials to be selected from ceramic materials having a lower Mohs hardness, such as a Mohs hardness of less than or equal to 5, for example, ceramic materials having a Mohs hardness of 3.5 to 5.0, such as 3.5 to 4.5, or 4.0 to 6.0, or 4.5 to 5.5. At higher amounts of matrix material with high Mohs hardness, it is desirable to use dislocator materials selected from ceramic materials with lower Mohs hardness. For example, hafnon has a relatively high hardness. When the abradable coating layer has a hafnon matrix that amounts to 50-60 vol.% based on the total volume of the abradable coating layer excluding porosity, it is desirable for the dislocator materials to have a lower Mohs hardness, for example, a Mohs hardness of 3.5 to 4.5.

Additionally, it is desirable for the abradable coating layer to have a coefficient of thermal expansion (CTE) that closely matches the CTE of the substrate being coated. When applying the abradable coating layer to a substrate, it is desirable for the abradable coating layer to have a CTE that does not differ by more than 50% from that of the substrate. Ceramic matrix materials (CMCs), such as SiC/SiC or C/SiC composites, have a CTE of 4.5 × 10⁻⁶/°C to 5.5 × 10⁻⁶/°C. Thus, it is desirable for the matrix material and the dislocator material (as well as the abradable coating layer over all) to have a CTE below 6 × 10⁻⁶/°C, for example, 4.0 × 10⁻⁶/°C to 6.0 × 10⁻⁶/°C or 4.5 × 10⁻⁶/°C to 5.5× 10⁻⁶/°C.

Additionally, the materials that make up the abradable coating layer should desirably have a melting point such that they can withstand the hot gas environments to which the internal surfaces of gas turbine engines are exposed. For this reason, it is desirable for the materials of the abradable coating layer, both the matrix material and the dislocator material, to have a melting point of greater than or equal to 1500°C, for example, greater than or equal to 1650°C, greater than or equal to 1800°C, or greater than or equal to 1850°C.

Suitable materials for the dislocator materials are anorthite, mullite, and rare earth phosphate materials that have the physical properties discussed above, for example, a Mohs hardness of less than or equal to 6, a CTE below 6 × 10⁻⁶/°C, and a melting point of greater than or equal to 1500°C. Regarding rare earth phosphates, these materials are desirably of the formula RE'PO₄, wherein RE' is Y, Sc, Tb, Dy, Ho, Er, Tm, Yb, or Lu.

As noted above, the abradable coating desirably has a low porosity, less than or equal to 10 vol.% based on the total volume of the coating. To avoid penetration of corrosive hot water vapor, it is desirable for the abradable coating to have as low a porosity as possible, for example, a porosity of 0 to 10 vol.% or 1 to 10 vol.% or 2 to 8 vol.% or 1 to 5 vol.%, based on the total volume of the coating.

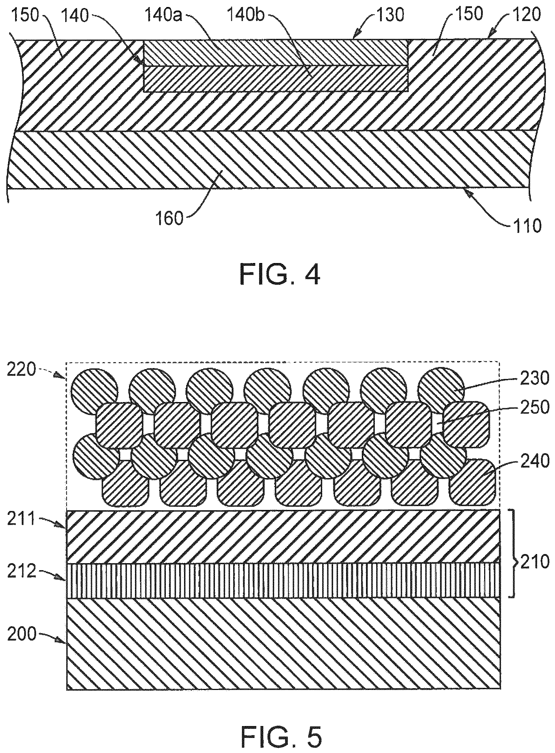

Fig. 4 shows a cross section of an embodiment of Fig. 3. In this embodiment, the abradable coating 140 only extends along part of the concave radially inward surface 120, i.e., the region of the concave radially inward surface 120 where the rub interaction events between the blade and the seal will occur, i.e., region 130. It should be understood that the abradable coating 140 may extend either across the entire concave radially inward surface 120 or across only a portion thereof, but it is desirable that the abradable coating layer 140 extends across at least the rub interaction region 130.

As noted above, turbomachinery, such as gas turbine engines, have components that are expose to hostile environments due high temperatures. These components may also further include EBCs applied to the surface of the substrate to protect the substrate from corrosive forces due to, for example, exposure to high temperature water vapor. Therefore, in addition to abradable coatings, components may also be provided with EBCs to provide thermal and corrosion protection. For example, EBC coatings can be applied to components, such as seals, that are used in high temperature locations (e.g., high pressure turbine stages aft of the combustor). Both EBCs and abradable coatings can be multilayered.

**In** Fig. 4, the abradable coating 140 is applied on top of an EBC 150, which in turn is applied on top of a ceramic matrix composite substrate 160. EBC 150 can be a single layered or multilayered structure. For example, the environmental barrier coating 150 can include a bond coat layer and a top coat layer wherein the bond coat layer provides adhesion between ceramic matrix composite substrate 160 and the environmental barrier coating 150, and the top coat layer provides the predominant amount of environmental barrier properties to protect the ceramic matrix composite substrate 160.

As shown in Fig. 4, the abradable coating 140 can be a multi-layered structure. For example, top layer 140a and bottom layer 140b can be an abradable coating layers having different degrees of abradability, e.g., top layer 140a can have a greater degree of abradability then bottom layer 140b. For example, bottom layer 104b can have a higher matrix content than that of layer 140a, thereby exhibiting a lower abradability, so as to act as a buffer transition layer between layer 140a, having a relatively high abradability, and the EBC having relatively low abradability.

Fig. 5 shows a cross section of a coated article according to the present disclosure in which the abradable coating is shown in more detail. As shown in Fig. 5, an EBC coating system 210 is made up of a dense (i.e., low porosity) EBC layer 211, e.g., a coating of hafnon or hafnon/zircon mixture, and a bond coat layer 212. The EBC coating system 210 is applied to a CMC substrate 200. The dense EBC layer 211 provides protection for the CMC substrate against corrosive forces and the bond coat layer 212 facilitates adhesion between the dense EBS layer and for the CMC substrate. An abradable coating 220 is applied unto the dense EBC layer 211. The abradable coating 220 includes matrix particles 230 (hafnon or hafnon/zircon mixture), abradable particles 240, and pores 250 that result from the application process.

The abradable coatings can be applied in a variety of thicknesses. For example, the abradable coating can have a thickness of 50 µm to 1500 µm, such as 50 to 750 µm. The abradable layer (or layers) can be applied by, for example, air plasma spraying. In this regard, powders making up the matrix materials and the dislocator materials can be applied by co-spraying the individual powders. Alternatively, the powders can be blended together and sprayed as a blend. The layers of the EBC can also be applied by air plasma spraying. These layers, abradable and EBC, may also be applied by other suitable methods, such as by a slurry process, low pressure thermal spray (LPPS), flame spraying (such as high velocity oxygen fuel spraying (HVOF) and high velocity air fuel spraying HVAF) and suspension plasma spraying.

The corresponding structures, material, acts, and equivalents of all means or steps plus function elements in the claims below are intended to include any structure, material, or act for performing the function in combination with other claimed elements are specifically claimed. The above description of the present invention has been presented for purposes of illustration and description, but is not intended to be exhaustive or limited to the invention in the form disclosed. Many modifications and variations will be apparent to those of ordinary skill without departing from the scope and spirit of the invention. The specific embodiment(s) described above were chosen and described in order to explain principles of the invention and the practical applications thereof, and to enable others of ordinary skill in the art to understand the invention for embodiments with various modifications as are suited to the particular use contemplated.

While the present disclosure has been particularly described, in conjunction with specific preferred embodiments, it is evident that many alternatives, modifications and variations will be apparent to those skilled in the art in light of the foregoing description. It is therefore contemplated that the appended claims will embrace any such alternatives, modifications and variations as falling within the true scope and spirit of the present disclosure.

## Claims

1. An abradable coating (140; 220) comprising:
a matrix material (230) selected from hafnon, mixtures of hafnon and zircon, and rare earth disilicates (RE₂Si₂O₇), wherein RE is Sc, Y, La, Ce, Pr, Nd, Pm, Sm, Eu, Gd, Tb, Dy, Ho, Er, Tm, Yb, or Lu; and
one or more dislocator materials selected from ceramic materials having a Mohs hardness of less than or equal to 6;
wherein the amount of matrix material is 30-60 vol.% based on the total volume of the coating excluding porosity (250), and the amount of dislocator materials is 40-70 vol.% based on the total volume of the coating excluding porosity, and
the abradable coating (140; 220) has a porosity (250) of less than or equal to 10 vol.% based on the total volume of the abradable coating (140; 220).

2. The abradable coating according to claim 1, wherein the matrix material (230) is mixture of hafnon and zircon wherein the molar ratio of hafnon to zircon is between 2: 1 and 4:1, optionally between 7:3 to 3:1.

3. The abradable coating according to claim 1, wherein the matrix material (230) is selected from rare earth disilicates (RE₂Si₂O₇), wherein RE is Sc, Y, La, Ce, Pr, Nd, Pm, Sm, Eu, Gd, Tb, Dy, Ho, Er, Tm, Yb, or Lu.

4. The abradable coating according to any preceding claim, wherein said one or more dislocator materials are selected from ceramic materials having a Mohs hardness of 3.5 to 6.0; and/or wherein said one or more dislocator materials are selected from ceramic materials having a Mohs hardness of less than or equal to 5.0.

5. The abradable coating according to any preceding claim, wherein said one or more dislocator materials are selected from ceramic materials having a coefficient of thermal expansion of less than 6 × 10⁻⁶/°C.

6. The abradable coating according to any preceding claim, wherein said one or more dislocator materials are selected from anorthite, mullite, and RE'PO₄, wherein RE' is Y, Sc, Tb, Dy, Ho, Er, Tm, Yb, and Lu.

7. The abradable coating according to any preceding claim, wherein the amount of matrix material (230) is 50-60 vol.% based on the total volume of the abradable coating (140; 220) excluding porosity (250), and the amount of dislocator materials is 40-50 vol.% based on the total volume of the abradable coating (140; 220) excluding porosity (250).

8. The abradable coating according to any preceding claim, wherein the amount of matrix material (230) is hafnon, and said one or more dislocator materials are selected from ceramic materials having a Mohs hardness of 3.5 to 4.5.

9. The abradable coating according to any preceding claim, wherein the abradable coating (140; 220) has a porosity (250) of 1 to 10 vol.% based on the total volume of the coating (140; 220).

10. A coated article (60; 100) comprising:
a ceramic matrix composite substrate (160; 200) and a coating system;
wherein the coating system comprises a first abradable coating layer (220) including the abradable coating (140; 220) of claim 1.

11. The coated article according to claim 10, wherein said coated article (60; 100) is a blade outer air seal (60; 100), optionally wherein the abradable coating (140; 220) is applied to an area of the blade outer air seal (60; 100) in the region of rub interaction between a blade (70) and the blade outer air seal (60; 100).

12. The coated article according to claim 10 or 11, wherein said coating system includes an environmental barrier coating (150; 210) positioned between said ceramic matrix composite substrate (160; 200) and said first abradable coating (140; 220).

13. The coated article according to claim 12, wherein said environmental barrier coating (210) is multilayered, optionally wherein said environmental barrier coating (210) comprises a bond layer (212) and a top coat layer (211).

14. A method for preparing a coated article (60; 100) comprising:
applying a coating system to a ceramic matrix composite substrate (160; 200);
wherein the coating system comprises a first abradable coating layer (140; 220) comprising a matrix material (230) selected from hafnon, mixtures of hafnon and zircon, and rare earth disilicates (RE₂Si₂O₇), wherein RE is Sc, Y, La, Ce, Pr, Nd, Pm, Sm, Eu, Gd, Tb, Dy, Ho, Er, Tm, Yb, or Lu, and one or more dislocator materials selected from ceramic materials having a Mohs hardness of less than or equal to 6; and
wherein the amount of matrix material (230) in said first abradable coating layer (140; 220) is 30-60 vol.% based on the total volume of the first abradable coating layer (140; 220) excluding porosity (250), and the amount of dislocator materials in said first abradable coating layer (140; 220) is 40-70 vol.% based on the total volume of the first abradable coating layer (140; 220) excluding porosity (250), and the first abradable coating layer (140; 220) has a porosity (250) of less than or equal to 10 vol.% based on the total volume of the first abradable coating layer (140; 220).

15. The method according to claim 14, wherein said matrix material (230) and one or more dislocator materials are applied simultaneously; and/or wherein said coating system further comprises an environmental barrier coating (150; 210) positioned between said ceramic matrix composite substrate (160; 200) and said first abradable coating layer (140; 220).
